# EUROPÄISCHE PATENTSCHRIFT

(11) **EP 0 748 970 B1**
(45) Veröffentlichungstag und Bekanntmachung des Hinweises auf die Patenterteilung: **19.12.2001**
(21) Anmeldenummer: 96109368.9
(22) Anmeldetag: 12.06.1996
(51) Int. Cl.: F16K 37/00, F16K 17/04

(54) **Verfahren und Vorrichtung zur Dämpfung des Ventilhubes an federbelasteten Ventilen**
Method and apparatus to dampen the valve lift of a spring-loaded valve
Procédé et appareil pour l'amortissement de la levée d'une soupape à ressort

(30) Priorität: 13.06.1995 DE 19521499
(43) Veröffentlichungstag der Anmeldung: 18.12.1996
(73) Patentinhaber: ARI-ARMATUREN ALBERT RICHTER GmbH & Co.KG., 33758 Schloss Holte-Stukenbrock (DE)
(72) Erfinder: Stork, Erhard, Dipl.-Ing., 33378 Rheda-Wiedenbrück (DE)
(74) Vertreter: Stracke, Alexander, Dipl.-Ing.

(56) Entgegenhaltungen:
- EP-A- 0 063 968
- WO-A-93/19317
- WO-A-93/24779
- DE-A- 3 824 089
- US-A- 4 572 237
- PATENT ABSTRACTS OF JAPAN vol. 013, no. 242 (P-880), 7.Juni 1989 & JP 01 044515 A (TLV), 16.Februar 1989,

## Beschreibung

Sicherheitseinrichtungen sowie Durchflußbegrenzungseinrichtungen in druckbeaufschlagten Systemen unterliegen strengen Anforderungen, sowohl hinsichtlich der Funktion im Ansprechfall als auch hinsichtlich der Genauigkeit der geforderten Durchflußmenge.

Bekannte Ventilbauformen in diesem Bereich sind in der Regel immer so aufgebaut, daß ein unmittelbar wirkendes, federbelastetes Verschlußelement Verwendung findet, das bei Erreichen eines Ansprechdruckes entsprechend einer konstruktiv vorgebbaren Charakteristik für ein Öffnen und damit für einen austretenden Volumenstrom sorgt. Bei Sicherheitsventilen kann diese Charakteristik entweder als sogenanntes Normalventil, als Proportionalventil oder als Vollhubventil ausgeführt sein. Ist bei einem Normalventil keine ausdrückliche Charakteristik, also eine Abhängigkeit von Öffnung des Verschlußkörpers in Abhängigkeit von dem Druckverlauf, gefordert, so ist bei einem Proportionalventil dieser Verlauf näherungsweise linear, bei einem Vollhubventil wird ab einem bestimmten Überdruck über dem Ansprechdruck das Ventil schlagartig vollständig geöffnet.

Zur Erreichung derartiger Charakteristiken werden die Federelemente in Abhängigkeit vom Hub sehr sorgfältig auf einen abzuführenden Volumenstrom und den Ansprechdruck abgestimmt. Diese Abstimmung erfolgt beim Hersteller experimentell auf dem Prüfstand. Bei Vollhub-Charakteristik ist es üblich, durch Einbau einer Hubhilfe, unter Ausnutzung des austretenden Volumenstroms die Federkraft zusätzlich zu beeinflussen. Hierdurch überlagert sich ein üblicherweise lineares Öffnungsverhalten mit der Wirkung dieser Hubhilfe und führt zur gewünschten Vollhub-Charakteristik.

Durch ungünstige Anlagen und Einbauverhältnisse können derartige Ventile, insbesondere Sicherheitsventile, in ihrer Eigenschaft als Feder-/Masse-Systeme zu Schwingungen angeregt werden. Hierdurch kommt es im Bereich um den Ansprechdruck zu einem ständigen Öffnen und Schließen bzw. zu Veränderungen der Durchflußmenge in Abhängigkeit von leichten Druckschwankungen. Um diesen Betriebszustand zu verhindern, kommen vielfältig im bekannten Stand der Technik vorgeschlagene, nach unterschiedlichen Wirkprinzipien arbeitende Dämpfer zum Einsatz. Hierbei werden die Verschlußelemente der Ventile entweder durch Aufbringen einer Reibung, durch hydraulische Dämpfung oder durch Eingreifen von zusätzlichen Federkräften in ihrer freien Bewegung gehindert. Eine derartige Vorrichtung ist aus dem Dokument JP 01044515 bekannt. Alle dieser herkömmlichen Systeme haben jedoch den Nachteil, daß der Einfluß der Dämpfung auf die Bewegung der Verschlußelemente konstruktiv fest vorgegeben oder nur fest vorgebbar ist, da es hierbei auf eine genaue Abstimmung zwischen den Federelementen und den Dämpfungselementen ankommt. Hieraus resultiert, daß sich die Größe der Dämpfung nicht an der aktuell tatsächlich vorliegenden Amplitude und Geschwindigkeit der Schwingung orientiert und dadurch die Bewegung des Ventilstößels nicht oder nur unzureichend gedämpft wird. Besonders nachteilig ist, daß bei einer konstruktiv zu starken Auslegung des Dämpfungsmaßes die wichtige Funktion beispielsweise eines Sicherheitsventils so stark beeinträchtigt oder gar verhindert wird, daß das Sicherheitsventil bei einem zulässigen Öffnungsdruck nicht oder nicht schnell genug öffnet. Hierdurch können beträchtliche Schäden in den durch das Sicherheitsventil abgesicherten Anlagenteilen entstehen.

Aufgabe der vorliegenden Erfindung ist es daher, ein in herkömmlicher Weise konstruktiv durchgebildetes, federbelastetes Ventil dahingehend weiterzuentwickeln, daß ein an den Verschlußelementen des federbelasteten Ventils angeordnetes Dämpfungselement auf die Bewegung der Verschlußelemente derart Einfluß nimmt, daß der Einfluß sowohl zeitlich als auch in seiner Größe abgestimmt ist auf die Bewegung der Verschlußelemente und damit ein sicheres Öffnen und Schließen der Verschlußelemente entsprechend einer vorgebbaren Charakteristik gewährleistet ist. Darüberhinaus ist ein Verfahren zur Abstimmung des Dämpfungseinflusses auf die Bewegung der Verschlußelemente anzugeben.

Die Lösung dieser erfindungsgemäßen Aufgaben ergibt sich aus den kennzeichnenden Merkmalen der Ansprüche 1 und 9 in Zusammenwirken mit den Merkmalen der jeweiligen Oberbegriffe.

Erfindungswesentliches Merkmal eines Verfahrens zur Dämpfung des Ventilhubs an federbelasteten Ventilen ist es, die Dämpfung nicht wie bisher üblich fest konstruktiv für die Verschiebung der Verschlußelemente vorzugeben, sondern die Dämpfung auf die tatsächlich vorliegende Verschiebung abzustimmen. Hierzu wird die Verschiebung der Verschlußelemente durch mindestens einen an den Verschlußelementen angeordneten Sensor erfaßt, der für eine lineare Bewegung typische Zustandsgrößen wie Weg, Geschwindigkeit und/oder Beschleunigung erfaßt. In einem nachgelagerten Schritt werden die eine oder die mehreren ermittelten physikalischen Größen an eine Auswerteeinheit weitergemeldet, die diese physikalischen Größen weiterverarbeitet und eventuelle Abweichungen zwischen einer Soll-Bewegung und einer IstBewegung der Verschlußelemente ermittelt. Hierbei ist es auch denkbar, daß ausgehend von einer einzelnen physikalischen Größe aus dieser physikalischen Größe abgeleitete Größen berechnet werden. Wird eine Abweichung zwischen Soll- und IstBewegung der Verschlußelemente festgestellt, so kann nach dem erfindungsgemäßen Verfahren diese Abweichung entsprechend einer vorgebbaren Charakteristik in einen Stellwert für von mit Fremdenergie veränderlich beaufschlagbaren, an dem Verschlußelement oder einer Ventilstange angeschlossenen Dämpfungselementen umgewandelt werden. Der Stellwert repräsentiert hierbei die Größe der Fremdenergie, die dem Dämpfungselement aufgegeben wird, das seinerseits wiederum die Verschlußelemente des Ventils beeinflußt. Dieser Vorgang läuft zyklisch immer wiederholt in sehr kurzen Zeitabständen erneut ab.

In einer bevorzugten Ausführungsform wird die Abweichung zwischen dem Soll-Verlauf der Verschiebung der Verschlußelemente und dem gemessenen Ist-Verlauf durch Vergleichen mit einer Soll-Charakteristikermittelt,dieinForm eines Kennfeldes in der Auswerteeinheit abgelegt ist. In einem derartigen Kennfeld werden Idealverläufe der Verschiebung der Verschlußelemente in Abhängigkeit von der Zeit festgelegt, so daß sich zu jedem Zeitpunkt eine bestimmte Soll-Verschiebung ablesen läßt, In einer weiteren bevorzugten Ausführungsform werden in der Auswerteeinheit mehrere Kennfelder für die verschiedenen Bauarten von Ventilen mit der Charakteristik beispielsweise von Vollhubventilen, Proportionalventilen oder Normalventilen abgelegt. In einer weiteren bevorzugten Ausführungsform werden die verschiedenen, in der Auswerteeinheit abgelegten Kennfelder, die für verschiedene Ventiltypen eingesetzt werden können, durch eine Codierung aktiviert. In einer besonders vorteilhaften Ausführungsform ist es möglich, die Verschiebung der Verschlußelemente eines Normalventils durch die Aufprägung der Charakteristik eines Proportionaiventiles allein oder weitgehend durch die geeignete Stellwertvorgabe an das mindestens eine Dämpfungselement zu realisieren. Hierdurch ist es möglich, durch geeignete Ansteuerung des Dämpfungselementes auch mit konstruktiv nicht so aufwendigen Normalventilen die in den Sicherheitsstandards geforderten Charakteristiken beispielsweise von Proportionalventilen zu realisieren.

In einer weiteren bevorzugten Ausführungsform wird bei der Feststellung einer Identität von Soll-Wert und Ist-Wert der Verschiebung der Verschlußelemente, also einer Abweichung gleich oder nahezu Null kein Stellwert für das mindestens eine Dämpfungselement ermittelt und an dieses weitergeleitet, so daß die Verschiebung der Verschlußelemente allein aufgrund der Federcharakteristik und unbeeinflußt von dem Dämpfungselement bleibt.

In einer besonders bevorzugten Ausführungsform ist auch bei Ausfall der Fremdenergie für das Dämpfungselement das Ventil eigensicher, d.h. die Verschiebung des Ventiles erfolgt entsprechend der ventilseitig vorgegebenen Charakteristik des Federlementes ohne Einflußnahme des Dämpfungselementes. Hierdurch werden auch bei Ausfall der Energiezufuhr die Sicherheitsfunktionen eines erfindungsgemäßen Ventils nicht beeinträchtigt.

In einer weiteren vorteilhaften Ausführungsform wird zusätzlich zu der Ermittlung der Verschiebung der Verschlußelemente der Druck in dem mit dem Sicherheitsventil verbundenen Druckraum, beispielsweise durch einen zusätzlichen Sensor erfaßt, wobei dieser Wert z. B. zur Nachkorrektur des ermittelten Stellwertes für das Dämpfungselement genutzt werden kann. Hierdurch ist eine weitere Anpassung der Verschiebung der Verschlußelemente an die vorliegenden Anlagenverhältnisse möglich.

Erfindungswesentliches Merkmal einer vorgeschlagenen Vorrichtung zur Dämpfung des Ventilhubs an federbelasteten Ventilen, vorzugsweise Sicherheitsventilen, Druckminderventilen, Stellventilen und/oder Überstromventilen ist es, daß mindestens ein Sensor derart an den Verschlußelementen angeordnet ist, daß die Bewegung der Verschlußelemente erfaßbar ist, wobei weiterhin mindestens ein mit Fremdenergie beaufschlagbares, dadurch in seiner Wirkung veränderbares Dämpfungselement ebenfalls an den Verschlußselementen angeordnet ist und mit diesen wechselwirkt, und eine elektronische Auswerteeinheit funktionell so zwischen Sensor und Dämpfungselement angeordnet ist, daß die Sensorsignale entsprechend einer vorgebbaren Charakteristik in Stellgrößen für das Dämpfungselement umsetzbar und diesem aufgebbar sind.

In einer bevorzugten Ausführungsform wird die Auswerteeinheit durch einen Mikroprozessor, jeweils Speichermöglichkeiten für Programme und Kennfelder sowie Schnittstellen zu Sensoren, Dämpfungselementen und/oder übergeordneten Auswerteeinheiten sowie Umsetzer für eine Digital-/Analogwandlung und umgekehrt gebildet.

In einer weiteren bevorzugten Ausführungform sind die Auswerteeinheit, der mindestens eine Sensor sowie die Dämpfungselemente in einem gemeinsamen Gehäuse im Ventilkopf, vorzugsweise in Verlängerung der Ventilachse angeordnet.

Der mindestens eine Sensor zur Ermittlung der linearen Verschiebung der Verschlußelemente kann zur Ermittlung der physikalischen Größen Weg und/oder Geschwindigkeit vorgesehen sein. Sodann ist bei einer weiteren bevorzugten Ausführungsform der mindestens eine Sensor ein Sensor mit Ausgabe eines Analogwertes, der in der Auswerteeinheit Auswerteeinheit in einen Digitalwert wandelbar ist. Ebenfalls kann direkt ein Sensor Verwendung finden, der einen Digitalwert ausgibt.

Das mindestens eine mit Fremdenergie veränderlich beaufschlagbare Dämpfungselement kann in alternativer oder auch kombinierter Form Dämpfungselemente aufweisen, die magnetisch wirken, die elektrisch wirken und/oder die mit Fluiddruck arbeiten.

In einer besonders bevorzugten Ausführungsform wird an dem Ventil mindestens ein Sensor zur Erfassung des Druckes auf der Anlagenseite angeordnet, der an verschiedenen Stellen in dem Ventil den Druck erfaßt und diesen Wert ebenfalls an die Auswerteeinheit weiterleitet.

Besonders bevorzugt wird die Charakteristik zwischen dem Öffnen des Ventils nach Überschreiten des Ansprechdruckes sowie dem Schließen des Ventils nach Unterschreiten eines Ansprechdruckes so vorgegeben, daß eine Hystereseschleife vorliegt. Die Art dieser Hystereseschleife wird dabei in Abhängigkeit von der Bauform des Ventils sowie von dem geforderten Öffnungs- und Schließverhalten gewählt.

In einer besonders bevorzugten Ausführungsform werden die Stellwerte sowie die von dem mindestens einem Sensor erfaßten Meßwerte mittels einer Datenschnittstelle, vorzugsweise einer Busschnittstelle, zusätzlich z.B. an übergeordnete Auswerteeinheiten weitergemeldet. Hierbei ist in umgekehrter Richtung der Datenübertragung über diese Datenschnittstelle von der übergeordneten Auswerteeinheit ebenfalls ein geeignetes Kennfeld der mehreren möglichen Kennfelder mittels einer Codierung auswählbar. Auch ist über diese Datenschnittstelle die Ausführung von Diagnosefunktionen von einer übergeordneten Auswerteeinheit möglich. In einer weiteren Ausführungsform kann an diese Datenschnittstelle auch eine separate Diagnoseeinheit direkt angekoppelt werden, mit Hilfe derer Diagnosefunktionen an dem Ventil ausführbar sind.

Weitere bevorzugte Ausführungsformen zeigt die Zeichnung.

Es zeigen:
- Figur 1: ein erfindungsgemäßes Sicherheitsventil mit Dämpfer im Schnitt und prinziphaft dargestellter Auswerteeinheit,
- Figur 2: den prinziphaft beschriebenen Aufbau der Auswerteeinheit,
- Figur 3a: den Verlauf einer Hysteresekurve für ein Proportionalventil,
- Figur 3b: den Verlauf der Hysteresekurve für ein Vollhubventil,
- Figur 3c: den Verlauf der Hysteresekurve für ein Normalventil,
- Figur 4: ein erfindungsgemäßes Druckminderventil mit Dämpfer,
- Figur 5: ein erfindungsgemäßes Überströmventil mit Dämpfer,
- Figur 6: ein erfindungsgemäßes Stellventil mit Dämpfer.

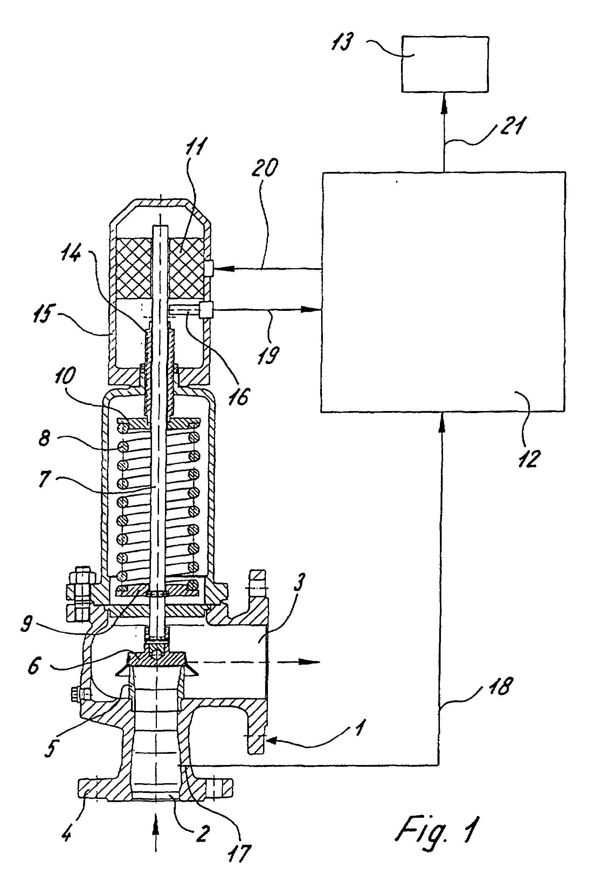

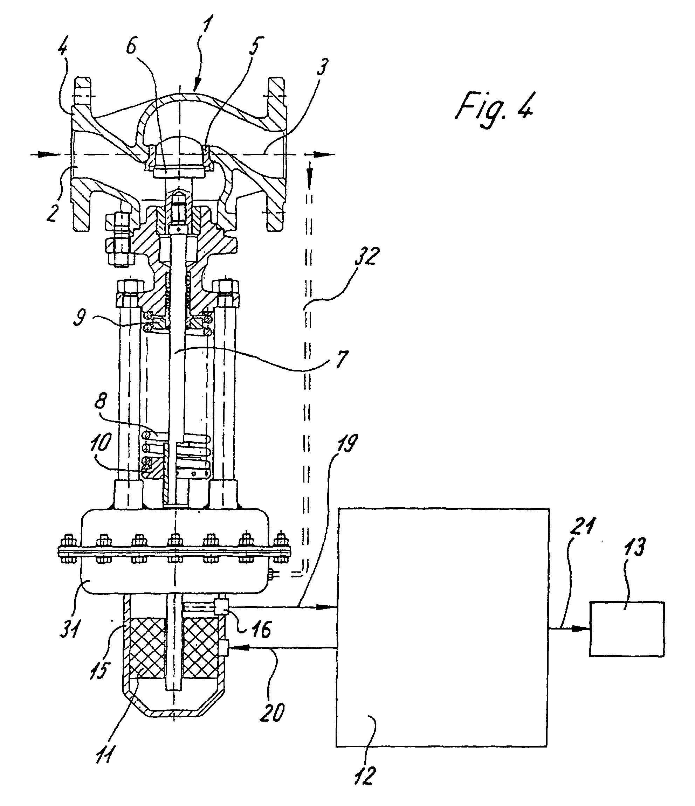

Die in den Figuren 1, 4, 5 und 6 darstellten erfindungsgemäßen Ventile weisen einen grundsätzlich gleichen oder ähnlichen Aufbau auf, wobei Unterschiede hinsichtlich der Grundfunktion sowie dazu benötigter Bauelemente bestehen. Da für die Beschreibung der erfindungsgemäßen Funktion der Ventile im wesentlichen nur die Ansteuerung des Dämpfungselementes von Bedeutung ist, wird zur Erläuterung beispielhafter Ausführungsformen hauptsächlich auf das in der Figur 1 dargestellte Sicherheitsventil mit Dämpfer abgestellt, die Figuren 4, 5 und 6 dienen nur zur Erläuterung anderer möglicher Einsatzgebiete des Dämpfers an Ventilen anderer Funktion.

Die in den Figuren 1 sowie 4 bis 6 verwendeten Bezugszeichen sind so gewählt, daß gleiche Bezugszeichen gleiche Funktionen und Bauteile benennen. Deshalb sei bei der Beschreibung der Figuren 4 bis 6 ausdrücklich auf die Beschreibung der Figur 1 verwiesen.

In der Figur 1 ist ein Sicherheitsventil 1 mit der erfindungsgemäßen Dämpfungseinrichtung und dem Dämpfer 11 dargestellt, der sich in dem Federhaubenaufsatz 15 befindet. Das in bekannter Weise aufgebaute Sicherheitsventil 1 ist beispielsweise an einen nicht dargestellten Druckraum mittels eines Flansches 4 angebaut und mittels eines Ventileintritts 2 mit diesem Druckraum verbunden. In Verlängerung des Ventileintritts 2 sitzt der Ventilsitz 5, der mit dem Verschlußelement 6 einen Abdichtungssitz gegenüber Austritt von Medium aus dem Druckraum über den Ventileintritt 2 verhindert. An dem Verschlußelement 6 ist an der dem Ventilsitz 5 abgewandten Seite eine Ventilstange 7 angeordnet, die oberseitig des Ventils 1 aus dem Ventilraum 3 des Ventiles austritt, der aus dem Ventileintritt 2 und dem Ventilaustritt 3 gebildet ist. Oberseitig der Abdichtung der Ventilstange 7 aus diesem Ventilraum ist an der Ventilstange 7 ein unterer Federteller 9 sowie ein oberer Federteller 10 angeordnet, zwischen denen die üblicherweise unter Vorspannung befindliche Feder 8 angeordnet ist. Oberseitig des oberen Ventiltellers 10 ist eine Vorspannvorrichtung 14 angeordnet, die eine Relativverschiebung des oberen Federtellers 10 gegenüber dem unteren Federteller 9 bewirken kann. Durch Verstellung dieser Vorspannvorrichtung 14 wird die Feder 8 unterschiedlich vorgespannt, so daß das Verschlußelement 6 an den Ventilsitz 5 mit unterschiedlicher Kraft angepreßt wird. Wird nun der Druck im Druckraum größer und überschreitet den durch die Federvorspannung der Feder 8 eingestellten Ansprechdruck, so hebt das durch den Ventileintritt 2 in den Ventilraum des Ventiles eintretende Fluid das Verschlußelement 6 vom Ventilsitz 5 ab und tritt durch den Ventilaustritt 3 in bestimmter Menge aus. Bleibt der im Druckraum herrschende Druck auch bei einem Abströmen von Volumen durch den Ventilaustritt 3 konstant, so bleibt der Verschlußkörper entsprechend der Ventilcharakteristik von dem Ventilsitz 5 abgehoben und läßt ein weiteres Abströmen von Fluid zu. Üblicherweise verändert sich jedoch der Druck im Druckraum mehr oder minder stetig, so daß das Verschlußelement 6, das zusammen mit der Ventilstange 7 und der Feder 8 ein schwingungsfähiges System bildet, seine Lage gegenüber dem Ventilsitz 5 ständig verändert. Diese Veränderungen der Lage des Verschlußelementes 6 bewirken gleich große Veränderungen der Lage der Ventilstange 7, die zur Erfassung mit der erfindungsgemäßen Dämpfungsvorrichtung sowie zur Beeinflussung dieser Verschiebung mittels des erfindungsgemäßen Verfahrens genutzt werden.

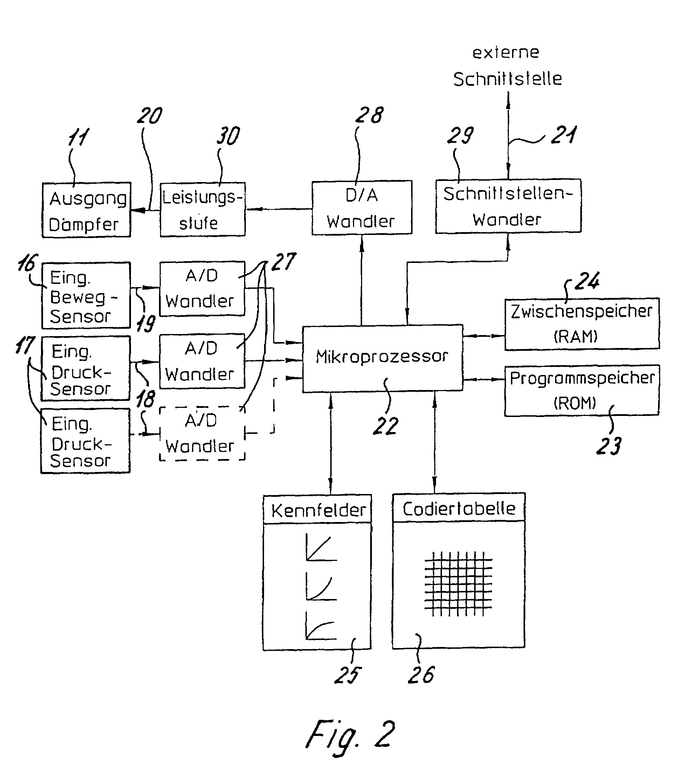

Hierzu ist oberhalb des Ventils 1 ebenfalls innerhalb des Federhaubenaufsatzes 15 mindestens ein Sensor 16, hier beispielsweise zur Erfassung des Weges der Ventilstange 7 angeordnet. Dieser Sensor 16 gibt in Abhängigkeit von seiner Bauform analoge oder digitale Signale 19 an eine Auswerteeinheit 12 weiter, die in noch nachstehend beschriebener Weise aus diesem Signal 19 einen Stellwert 20 für ein Dämpfungselement 11 ermittelt, das wiederum dem Dämpfungselement 11 aufgegeben wird und dessen Wirkung auf die Ventilstange 7 verändert. Das Dämpfungselement 11 wird üblicherweise mit Fremdenergie beaufschlagt, die direkt oder über die Auswerteeinheit 12 dem Dämpfungselement 11 aufgeprägt wird. Durch Veränderung dieser Fremdenergie in entsprechender Größe zu dem Stellwert 20 kann die Wirkungsweise des Dämpfungselementes 11 auf die Ventilstange 7 sehr genau beeinflußt werden. Schwingt beispielsweise die Ventilstange 7 aufgrund eines weiteren Abhebens des Verschlußelementes 6 von dem Ventilsitz 5 vertikal nach oben, so wird zur Dämpfung dieser Bewegung der Einfluß des Dämpfungselementes 11 auf die Ventilstange 7 erhöht. Hierdurch wird die Verschiebung der Ventilstange 7 verlangsamt, daß schwingungsfähige System aus Verschlußelement 6, Ventilstange 7 und Feder 8 reagiert damit träger. Für die Ermittlung der Stellwerte 20 sei auf die Beschreibung der Figur 2 hingewiesen.

An der Auswerteeinheit 12 kann in einer besonderen Ausführungsform eine Datenschnittstelle 29 angeordnet sein, die Signale 21 an die übergeordnete Auswerteeinheit 13 übermitteln kann.

In einer weiteren bevorzugten Ausführungsform ist an mindestens einer Stelle des Ventils 1, hier in der Nähe des Ventileintritts 2, ein Drucksensor 17 angeordnet, der den im Ventileintritt 2 anstehenden Druck hier aus einem vorgelagerten Druckraum, erfaßt, und dieses Sensorsignal 18 ebenfalls an die Auswerteeinheit 12 weiterleitet. Dieses Signal 18 kann z.B. zur Nachkorrektur des Stellwertes 20 genutzt werden, um eine weitere, verbesserte Anpassung des Verhaltens des Dämpfungselementes 11 an die Schwingungen des schwingungsfähigen Systems aus Verschlußelement 6, Ventilstange 7 und Feder 8 anzupassen.

In der Figur 2 ist in prinziphafter Weise die Funktion innerhalb der Auswerteeinheit 12 in Form eines Blockdiagrammes dargestellt. Zentraler Bestandteil der Auswerteeinheit 12 ist ein Mikroprozessor 22, der in an sich bekannter Weise mit einem Programmspeicher 23 und einem Zwischenspeicher 24 ausgestattet ist. Ebenfalls sind mit dem Mikroprozessor verbunden ein Speicher 25 für ein oder mehrere Kennfelder, die das Sollverhalten bei der Verschiebung der Ventilstange 7 nach Über- oder Unterschreiten eines Ansprechdruckes des Ventiles 1 beschreiben. Weiterhin ist der Mikroprozessor 22 verbunden mit einem Speicher 26 für eine Codiertabelle, in der in codierter Weise Werte für die Auswahl der Kennfelder aus dem Kennfeldspeicher 25 abgelegt sind. Weiterhin verfügt die Auswerteeinheit 12 über die Schnittstelle 29 über eine Verbindung zu einer nicht dargestellten, übergeordneten Auswerteeinheit 13, mit der die Auswerteeinheit 12 die schon beschriebenen Signale 21 austauschen kann.

Zur Ankopplung der Sensoren 17 und 16, die an dem Ventil 1 angeordnet sind, verfügt der Mikroprozessor 22 über jeweils mindestens einen Eingang für jeden Bewegungssensor 16 und jeden Drucksensor 17, wobei der hier dargestellte Bewegungssensor 16 über einen Analog-Digital-Wandler 27 an dem Mikroprozessor 22 angekoppelt ist. Gleichartig ist der hier dargestellte Drucksensor 17 ebenfalls über einen zugehörigen Analog-Digital-Wandler 27 angebunden. Für jeden weiteren angebundenen Sensor ist eine entsprechende Verbindung herzustellen, die die anstehenden Signale, hier die Sensorsignale 19 für z. B. den Weg und die Sensorsignale 18 für den Druck für den Mikroprozessor 22 erfaßbar machen.

Für die Ausgabe des Stellwertes 20 bzw. eines dem Stellwert 20 proportionalen Energiewertes verfügt der Mikroprozessor 22 über eine Verbindung zu einer Leistungsstufe 30, wobei in üblicher Weise die Verbindung über einen Digital-Analog-Wandler 28 erfolgt. Die Leistungsstufe 30 wertet den Stellwert 20 aus und gibt mittels eines Signales dem Dämpfer 11 den entsprechenden Stellwert 20 bzw. die dem Stellwert proportionale Energiegröße vor. Der Aufbau der Auswerteeinheit 12 entspricht damit weitgehend einem typischen Regler, wobei die Reglercharakteristik in dem Speicher 25 für die verschiedenen Kennfelder abgelegt ist.

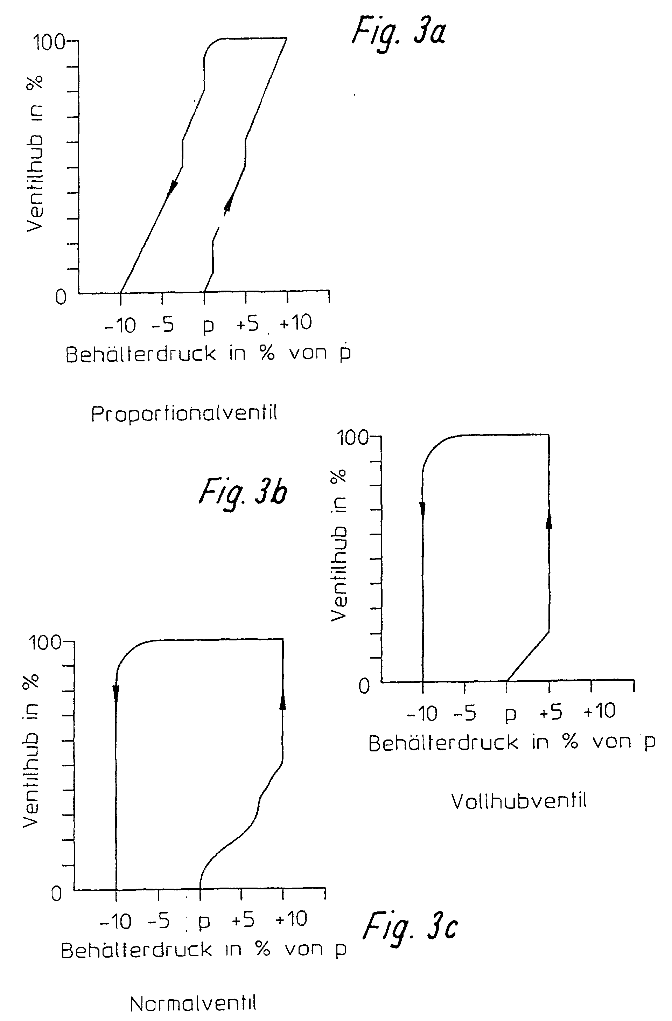

In den Figuren 3a bis 3c werden mögliche Charakteristiken für verschiedene Ventilbauarten dargestellt. In der Figur 3a ist ein Proportionalventil dargestellt, das einen im wesentlichen linearen Verlauf sowohl beim Druckanstieg als auch beim Druckabfall gewährleistet, wobei gewisse Abweichungen von der Linearietät festzustellen sind. Beim Ansprechdruck p beginnt das Ventil 1 ungefähr linear den Ventilhub freizugeben, der bis zu einer Vollöffnung bei 100% erfolgen kann. Bei Druckabfall wird erst bei einer Veränderung des Behälterdruckes in der Größenordnung von ca. 10% zu einem kleineren Wert der abfallende lineare Kennlinienteil durchlaufen.

In der Figur 3b ist die Charakteristik eines Vollhubventiles dargestellt, wobei in dem Bereich von + 5% des Behälterdruckes ein nahezu linearer Anstieg festzustellen ist, bei Erreichen eines Stellwertes von ca. 5% öffnet das Vollhubventil dann schlagartig auf 100% des Ventilhubes, erst bei einem Abfall von ca. 10-15% des Behälterdruckes erfolgt wiederum schlagartig das Schließen des Vollhubventils.

In der Figur 3c ist ein typischer Verlauf für ein Normalventil dargestellt, wobei in dem Bereich von +10% des Behälterdrucks ein mehr oder minder unspezifisches Öffnen, gegebenenfalls mit Anteilen wie bei einem Vollhubventil festzustellen ist, die Hysterese liegt hier im Bereich von ca. +/- 10% des Behälterdruckes, die abfallende Flanke der Hysterekurve ist wiederum wie bei einem Vollhubventil schlagartig ausgestaltet.

In der Figur 4 ist ein Druckminderventil mit der erfindungsgemäßen Dämpfungseinrichtung dargestellt, wobei zum grundsätzlichen Aufbau auf die Figur 1 verwiesen sei. Der funktionsmäßige Unterschied durch Verwendung eines Membranantreibes 31 sei hier als bekannt vorausgesetzt. An den Membranantrieb 31 ist eine Steuerleitung 32 anschließbar, die die Druckverhältnisse am Ventilauslaß 3 erfaßbar macht. Nicht dargestellt bei dieser Ausführungsform eines Druckminderventiles ist die Erfassung des Eintrittsdrucks am Ventileintritt 2. Hinsichtlich der Funktion des erfindungsgemäßen Dämpfungselementes sei auf die Beschreibung der Figur 1 verwiesen.

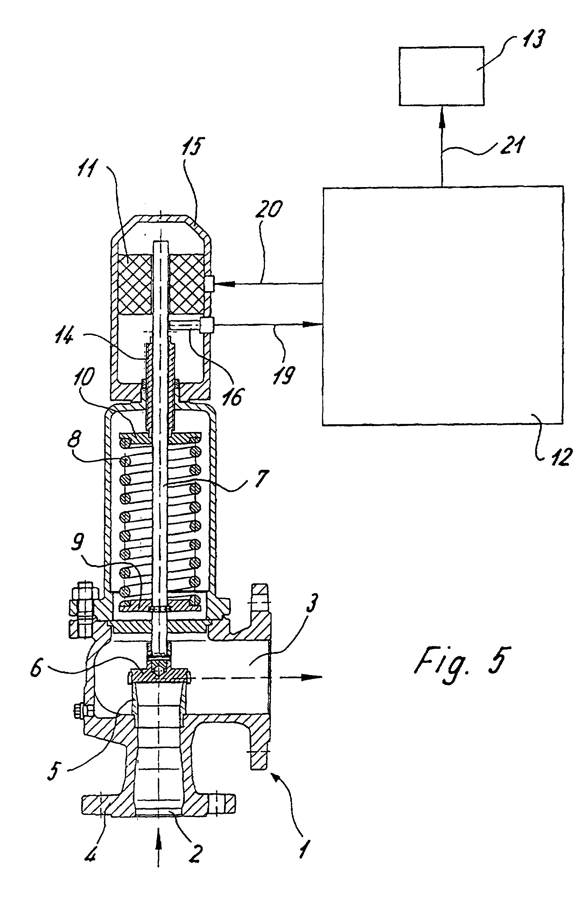

In der Figur 5 ist ein Überströmventil mit der erfindungsgemäßen Dämpfungseinrichtung dargestellt, wobei sich dieses Überströmventil weitgehend nur durch die Form des Verschlußelementes 6 von der Ausführungsform der Figur 1 unterscheidet. Durch das Überströmventil wird bei Erreichen eines Ansprechdruckes im Ventileintritt 2 ein Teil des Volumenstroms in den Ventilaustritt 3 gefördert, wodurch ein Druckabbau im Behälter, der mit dem Ventileintritt 2 verbunden ist, erfolgt. Ansonsten sei ebenfalls auf die Figur 1 verwiesen.

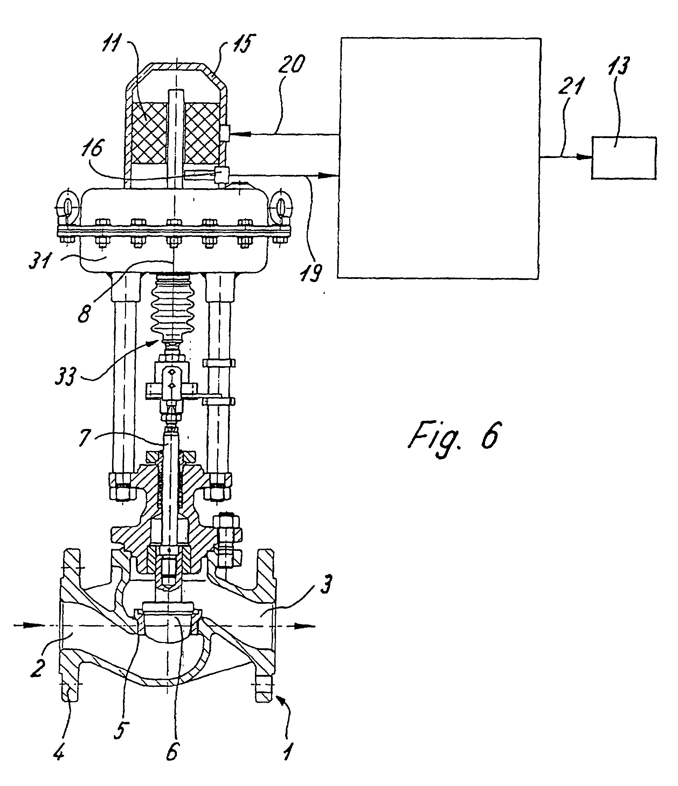

In der Figur 6 ist abschließend noch ein Stellventil mit einer erfindungsgemäßen Dämpfungsvorrichtung dargestellt, das ebenfalls mit einem Membranantrieb 31 ausgestattet ist und über eine in der Verlängerung der Ventilstange 7 angeordnete Stelleinrichtung 33 verfügt. Die Funktion des Dämpfungselementes 11 erfolgt wiederum analog zur Beschreibung der Figur 1, wobei die Dämpfung auf die stellantriebsseitige Verlängerung der Ventilstange 7 einwirkt.

### Bezugszeichenliste

- 1: Ventil
- 2: Ventileintritt
- 3: Ventilaustritt/Abblasleitung
- 4: Flansch
- 5: Ventilsitz
- 6: Verschlußelement
- 7: Ventilstange
- 8: Feder
- 9: unterer Federteller
- 10: oberer Federteller
- 11: Dämpfer
- 12: Auswerteeinheit
- 13: übergeordnete Auswerteeinheit
- 14: Vorspannvorrichtung
- 15: Federhaubenaufsatz
- 16: Sensor zur Verschiebungserfassung
- 17: Drucksensor
- 18: Sensorsignal Druck
- 19: Sensorsignal Weg
- 20: Stellwert
- 21: Signale an übergeordnete Auswerteeinheit
- 22: Mikroprozessor
- 23: Programmspeicher
- 24: Zwischenspeicher
- 25: Kennfeldspeicher
- 26: Codierspeicher
- 27: Analog-/Digitalwandler
- 28: Digitaf-/Analogwandler
- 29: Datenschnittstelle
- 30: Leistungsstufe
- 31: Membranantrieb
- 32: Steuerleitung
- 33: Stelleinrichtung

## Patentansprüche

1. Verfahren zur Dämpfung des Ventilhubs an federbelasteten Ventilen (1), vorzugsweise Sicherheitsventilen, Druckminderventilen, Stellventilen und/oder Übersrömventilen, deren Verschlußelemente (6) bei Über- oder Unterschreiten eines Ansprechdrucks linear verschoben und dabei durch Dämpfungselemente (11) beeinflußt werden,
**gekennzeichnet durch**
die laufend und wiederholt durchgeführten Verfahrensschritte
- sensorisches Erfassen der linearen Verschiebung der Verschlußelemente (6)
- Verarbeiten dieser an eine elektronische Auswerteeinheit (12) weitergemeldeten Sensorsignale (19), wobei aus den Sensorsignalen (19) auch abgeleitete Größen, vorzugsweise Weg, Geschwindigkeit oder Beschleunigung, und eventuelle Abweichungen zwischen einer Sollbewegung und einer Istbewegung der Verschlußelemente (6) ermittelt werden,
- eine ermittelte Abweichung nach einer vorgebbaren Charakteristik in einen Stellwert (20) für mindestens ein mit Fremdenergie veränderlich beaufschlagbares, an dem Verschlußelement (6) oder einer Ventilstange (7) angeschlossenes Dämpfungselement (11) umgewandtelt wird,
- dieser Stellwert (20) dem Dämpfungselement (11) aufgegeben wird.

2. Verfahren nach Anspruch 1, **gekennzeichnet durch** das Vergleichen zwischen einer in Form eines Kennfeldes in der Auswerteeinheit (12) abgelegten Charakteristik für den Soll-Verlauf der Verschiebung der Verschlußelemente (6) mit dem gemessenen Ist-Verlauf.

3. Verfahren nach einem der Ansprüche 1 oder 2, **gekennzeichnet durch** verschiedene, in der Auswerteeinheit (12) abgelegte Kennfelder für Ventile (1) mit verschiedenartiger Charakteristik, vorzugsweise für Vollhubventile, Proportionalventile oder Normalventile.

4. Verfahren nach Anspruch 3, **gekennzeichnet durch** Ablegen verschiedener Kennfelder in der Auswerteeinheit (12), die für verschiedene Ventiltypen angewendet und **durch** eine Codierung aktiviert wird.

5. Verfahren nach einem der Ansprüche 3 oder 4, **gekennzeichnet durch** das Aufprägen der Charakteristik eines Proportional- oder Vollhubventils auf die Verschiebung der Verschlußelemente (6) eines Normalventils mittels Stellwertvorgabe (20) an das Dämpfungselement (11).

6. Verfahren nach einem der Ansprüche 1 oder 2, **dadurch gekennzeichnet, daß** bei einer Identität von Soll-Wert und Ist-Wert der Verschiebung der Verschlußelemente (6) kein Stellwert (20) für das Dämpfungselement (11) an dieses weitergeleitet wird und die Verschiebung unbeeinflußt bleibt.

7. Verfahren nach einem der Ansprüche 1, 2 oder 6, **dadurch gekennzeichnet, daß** bei Ausfall der Fremdenergie für das Dämpfungselement (11) die Verschiebung des Ventils (1) entsprechend der ventilseitig vorgegebenen Charakteristik ohne Einflußnahme des Dämpfungselementes (11) erfolgt.

8. Verfahren nach einem der Ansprüche 1 oder 2, **gekennzeichnet durch** das zusätzliche Erfassen eines Druckes in dem mit dem Ventil (1) verbundenen Druckraum, dessen Wert zur Korrektur des ermittelten Stellwertes (20) für das Dämpfungselement (11) genutzt wird.

9. Vorrichtung zur Dämpfung des Ventilhubs an federbelasteten Ventilen (1), vorzugsweise Sicherheitsventilen, Druckminderventilen, Stellventil und/oder Überströmventilen, deren Verschlußelemente (6) bei Über- oder Unterschreiten eines Ansprechdrucks linear verschoben und dabei durch Dämpfungselemente (11) beeinflußt werden,
**dadurch gekennzeichnet, daß**
- mindestens ein Sensor (16) derart an den Verschlußelementen (6) angeordnet ist, daß die Bewegung der Verschlußelemente (6) erfaßbar ist,
- mindestens ein mit Fremdenergie beaufschlagbares, dadurch in seiner Wirkung veränderbares Dämpfungselement (11) an den Verschlußelementen (6) angeordnet ist und mit diesen wechselwirkt,
- eine elektronische Auswerteeinheit (12) funktionell so zwischen Sensor (16) und Dämpfungselement (11) angeordnet ist, daß die Sensorsignale (19) entsprechend einer vorgebbaren Charakteristik in Stellgröβen (20) für das Dämpfungselement (11) umsetzbar und diesem aufgebbar sind.

10. Vorrichtung nach Anspruch 9, **dadurch gekennzeichnet, daß** die Auswerteeinheit einen Mikropozessor (22), jeweils Speicher (23, 24, 25) für Programme und Kennfelder sowie Schnittstellen zu Sensoren (16, 17), Dämpfungselementen (11) und übergeordneten Auswerteeinheiten (13) sowie Digital-Analog-Umsetzer (27, 28) aufweist.

11. Vorrichtung nach Anspruch 9, **dadurch gekennzeichnet, daß** die Auswerteeinheit (12), der mindestens ein Sensor (16) sowie die Dämpfungselemente (11) in einem gemeinsamen Gehäuse (15) im Ventilkopf, vorzugsweise in Verlängerung der Ventilachse, angeordnet sind.

12. Vorrichtung nach Anspruch 9 oder 11, **dadurch gekennzeichnet, daß** der mindestens eine Sensor (16) zur Ermittlung der linearen Verschiebung der Verschlußelemente (6) ein Sensor zur Wegmessung ist.

13. Vorrichtung nach Anspruch 9 oder 11, **dadurch gekennzeichnet, daß** der mindestens eine Sensor (16) zur Ermittlung der linearen Verschiebung der Verschlußelemente (6) ein Geschwindigkeitssensor ist.

14. Vorrichtung nach Anspruch 9 oder 11, **dadurch gekennzeichnet, daß** der mindestens eine Sensor (16) zur Ermittlung der Verschiebung der Verschlußelemente (6) ein Sensor mit Ausgabe eines Analogwertes ist, der in der Auswerteeinheit (12) in einen Digitalwert wandelbar ist.

15. Vorrichtung nach Anspruch 9, **dadurch gekennzeichnet, daß** das mindestens eine mit Fremdenergie veränderlich beaufschlagbare Dämpfungselement (11) ein magnetisch wirkendes Dämpfungselement (11) ist.

16. Vorrichtung nach Anspruch 9, **dadurch gekennzeichnet, daß** das mindestens eine mit Fremdenergie veränderlich beaufschlagbare Dämpfungselement (11) ein elektrisch wirkendes Dämpfungselement (11) ist.

17. Vorrichtung nach Anspruch 9, **dadurch gekennzeichnet, daß** das mindestens eine mit Fremdenergie veränderlich beaufschlagbare Dämpfungselement (11) ein mit Fluiddruck arbeitendes Dämpfungselement (11) ist.

18. Vorrichtung nach Anspruch 9, **dadurch gekennzeichnet, daß** zusätzlich an dem Ventil (1) mindestens ein Sensor (17) zur Erfassung des Druckes auf der Anlagenseite angeordnet ist, der seinen Wert ebenfalls an die Auswerteeinheit (12) weiterleitet.

19. Vorrichtung nach Anspruch 9, **dadurch gekennzeichnet, daß** die Charakteristik zwischen Öffnen des Ventiles (1) nach Überschreiten eines Ansprechdruckes sowie Schließen des Ventiles (1) nach Unterschreiten des Ansprechdruckes hysterese behaftet ist.

20. Vorrichtung nach Anspruch 19, **dadurch gekennzeichnet, daß** die Hysterese in Abhängigkeit von der Bauform des Ventils (1) wählbar ist.

21. Vorrichtung nach Anspruch 10, **dadurch gekennzeichnet, daß** die Stellwerte (20) sowie die von den mindestens einem Sensor (16, 17) erfaßten Meßwerte (19, 18) mittels einer Datenschnittstelle (29), vorzugsweise einer Busschnittstelle, z.B. an übergeordnete Auswerteeinheiten (13) weitermeldbar ist.

22. Vorrichtung nach Anspruch 21, **dadurch gekennzeichnet, daß** über die Datenschnittstelle (29) von einer übergeordneten Auswerteeinheit (13) ein geeignetes Kennfeld der Codierung auswählbar ist.

23. Vorrichtung nach Anspruch 21, **dadurch gekennzeichnet, daß** über die Datenschnittstelle (29) Diagnosefunktionen von einer übergeordneten Auswerteeinheit (13) ausführbar sind.

24. Vorrichtung nach Anspruch 23, **dadurch gekennzeichnet, daß** diese Diagnosefunktionen auch durch direktes Ankoppeln einer separaten Diagnoseeinheit an die Datenschnittstelle (29) ausführbar ist.

## Claims

1. Method for damping the valve stroke on springloaded valves (1), preferably safety valves, pressure-reducing valves, control valves and/or overflow valves, the closure elements (6) of which are displaced linearly when a response pressure is exceeded or undershot and are influenced during this process by damping elements (11),
**characterized by**
the following continuous and repeated method steps
- sensory detection of the linear displacement of the closure elements (6)
- processing of these sensor signals (19) passed on to an electronic evaluation unit (12), the sensor signals (19) also being used to determine derived variables, preferably travel, speed or acceleration and any deviations between a desired movement and an actual movement of the closure elements (6),
- converting a deviation determined in accordance with a predeterminable characteristic into a value (20) of a manipulated variable for at least one damping element (11) that can be supplied with external energy in a variable manner and is connected to the closure element (6) or a valve rod (7),
- applying this value (20) of the manipulated variable to the damping element (11).

2. Method according to Claim 1, **characterized by** the comparison between a characteristic for the desired profile of the displacement of the closure elements (6), which is stored in the form of a characteristic map in the evaluation unit (12), with the measured actual profile.

3. Method according to either of Claims 1 and 2, **characterized by** different characteristic maps stored in the evaluation unit (12) for valves (1) with characteristics of different types, preferably for full-stroke valves, proportional valves or standard valves.

4. Method according to Claim 3, **characterized by** storage of different characteristic maps in the evaluation unit (12), which is used for different types of valve and activated by coding.

5. Method according to either of Claims 3 and 4, **characterized by** the impression of the characteristic of a proportional or full-stroke valve on the displacement of the closure elements (6) of a standard valve by stipulation of a value (20) of a manipulated variable to the damping element (11).

6. Method according to either of Claims 1 and 2, **characterized in that**, if the desired value and the actual value of the displacement of the closure elements (6) are identical, no value (20) of the manipulated variable for the damping element (11) is passed to the latter, and the displacement remains unaffected.

7. Method according to one of Claims 1, 2 or 6, **characterized in that**, if the external energy for the damping element (11) fails, the displacement of the valve (1) takes place in accordance with the characteristic predetermined in the valve without being influenced by the damping element (11).

8. Method according to either of Claims 1 and 2, **characterized by** additional detection of a pressure in the pressure space connected to the valve (1), the value of which is used to correct the value (20) of the manipulated variable determined for the damping element (11).

9. Device for damping the valve stroke on springloaded valves (1), preferably safety valves, pressure-reducing valves, control valve [sic] and/or overflow valves, the closure elements (6) of which are displaced linearly when a response pressure is exceeded or undershot and are influenced during this process by damping elements (11),
**characterized in that**
- at least one sensor (16) is arranged on the closure elements (6) in such a way that the movement of the closure elements (6) can be detected,
- at least one damping element (11) that can be supplied with external energy and whose action can thereby be varied is arranged on the closure elements (6) and interacts with the latter,
- an electronic evaluation unit (12) is arranged functionally between the sensor (16) and the damping element (11) in such a way that the sensor signals (19) can be converted into manipulated variables (20) for the damping element (11) in accordance with a predeterminable characteristic and can be applied to the said damping element.

10. Device according to Claim 9, **characterized in that** the evaluation unit has a microprocessor (22), respective memories (23, 24, 25) for programs and characteristic maps and interfaces with sensors (16, 17), damping elements (11), higher-level evaluation units (13) and digital/analog converters (27, 28).

11. Device according to Claim 9, **characterized in that** the evaluation unit (12), the at least one sensor (16) and the damping elements (11) are arranged in a common housing (15) in the valve head, preferably on an extension of the valve axis.

12. Device according to Claim 9 or 11, **characterized in that** the at least one sensor (16) for determining the linear displacement of the closure elements (6) is a sensor for measuring travel.

13. Device according to Claim 9 or 11, **characterized in that** the at least one sensor (16) for determining the linear displacement of the closure elements (6) is a speed sensor.

14. Device according to Claim 9 or 11, **characterized in that** the at least one sensor (16) for determining the displacement of the closure elements (6) is a sensor that outputs an analog value, which can be converted into a digital value in the evaluation unit (12).

15. Device according to Claim 9, **characterized in that** the at least one damping element (11) that can be supplied with external energy in a variable manner is a magnetically acting damping element (11).

16. Device according to Claim 9, **characterized in that** the at least one damping element (11) that can be supplied with external energy in a variable manner is an electrically acting damping element (11).

17. Device according to Claim 9, **characterized in that** the at least one damping element (11) that can be supplied with external energy in a variable manner is a damping element (11) that operates with fluid pressure.

18. Device according to Claim 9, **characterized in that** at least one sensor (17) for detecting the pressure on the plant side, which likewise passes its value to the evaluation unit (12), is additionally arranged on the valve (1).

19. Device according to Claim 9, **characterized in that** the characteristic between the opening of the valve (1) after a response pressure has been exceeded and the closure of the valve (1) after the response pressure has been undershot is subject to hysteresis.

20. Device according to Claim 19, **characterized in that** the hysteresis can be chosen as a function of the design of the valve (1).

21. Device according to Claim 10, **characterized in that** the values (20) of the manipulated variable and the measured values (19, 18) detected by the at least one sensor (16, 17) can be passed to higher-level evaluation units (13), for example, by means of a data interface (29), preferably a bus interface.

22. Device according to Claim 21, **characterized in that** a suitable characteristic map of the coding can be selected by a higher-level evaluation unit (13) via the data interface (29).

23. Device according to Claim 21, **characterized in that** diagnostic functions can be performed by a higher-level evaluation unit (13) via the data interface (29).

24. Device according to Claim 23, **characterized in that** these diagnostic functions can also be carried out by connecting a separate diagnostic unit directly to the data interface (29).

## Revendications

1. Procédé pour amortir la course de soupapes (1) sollicitées par un ressort, de préférence des soupapes de sécurité, des soupapes de réduction de pression, des soupapes de réglage et/ou des soupapes de surcharge dont les éléments d'obturation (6) sont déplacés linéairement dans le cas où une pression de réponse est dépassée ou n'est pas atteinte et qui dans ce cas sont influencés par des éléments d'amortissement (11)
**caractérisé par**
les étapes de procédé exécutées de manière continue et renouvelée :
- détection par capteur du déplacement linéaire des éléments d'obturation (6),
- traitement de ces signaux de capteur (19) transmis à une unité de traitement électronique (12), des grandeurs dérivées des signaux de capteur (19), de préférence course, vitesse ou accélération et écarts éventuels entre un déplacement de consigne et un déplacement réel des éléments d'obturation (6), étant déterminées,
- un écart déterminé par rapport à une caractéristique prédéterminée est converti en une valeur de réglage (20) pour au moins un élément d'amortissement (11) qui peut être sollicité de manière variable par une énergie externe et qui est raccordé à l'élément d'obturation (6) ou à une tige de soupape (7),
- cette valeur de réglage (20) est transmise à l'élément d'amortissement (11).

2. Procédé selon la revendication 1, **caractérisé par** la comparaison entre une caractéristique, consignée sous la forme d'un champ caractéristique dans l'unité de traitement (12), pour l'allure de consigne du déplacement des éléments d'obturation (6) et l'allure réelle mesurée.

3. Procédé selon l'une des revendications 1 ou 2, **caractérisé par** différents champs caractéristiques, consignés dans l'unité de traitement (12), pour des soupapes (1) à caractéristique différente, de préférence pour des soupapes à pleine course, des soupapes proportionnelles ou des soupapes normales.

4. Procédé selon la revendication 3, **caractérisé par** la mémorisation de différents champs caractéristiques dans l'unité de traitement (12) qui est utilisée pour différents types de soupapes et activée par un codage.

5. Procédé selon l'une des revendications 3 ou 4, **caractérisé par le fait que** l'on impose la caractéristique d'une soupape proportionnelle ou d'une soupape à pleine course au déplacement des éléments d'obturation (6) d'une soupape ordinaire, au moyen de la sélection d'une valeur de réglage (20) sur l'élément d'amortissement (11).

6. Procédé selon l'une des revendications 1 ou 2, **caractérisé en ce que** dans le cas d'une identité entre la valeur de consigne et la valeur réelle du déplacement des éléments d'obturation (6), aucune valeur de réglage (20) de l'élément d'amortissement (11) n'est transmise à celui-ci, et le déplacement reste non influencé.

7. Procédé selon l'une des revendications 1, 2 ou 6, **caractérisé en ce qu'**en cas de coupure de l'énergie externe pour l'élément d'amortissement (11), le déplacement de la soupape (1) s'effectue conformément à la caractéristique prédéterminée côté soupape, sans influence sur l'élément d'amortissement (11).

8. Procédé selon l'une des revendications 1 ou 2, **caractérisé par** la détection supplémentaire d'une pression dans la chambre de pression reliée à la soupape (1), dont la valeur est utilisée pour corriger la valeur de réglage (20) déterminée pour l'élément d'amortissement (11).

9. Dispositif d'amortissement de la course de soupapes (1) sollicitées par un ressort, de préférence des soupapes de sécurité, des soupapes de réduction de pression, des soupapes de réglage et/ou des soupapes de surcharge dont les éléments d'obturation (6) sont déplacés linéairement dans le cas où une pression de réponse est dépassée ou n'est pas atteinte et qui dans ce cas sont influencés par des éléments d'amortissement (11)
**caractérisé en ce que**
- il est disposé sur les éléments d'obturation (6) au moins un capteur (16) de manière que le déplacement des éléments d'obturation (6) puisse être détecté,
- un élément d'amortissement (11), qui peut être sollicité par une énergie externe et qui de ce fait est d'action variable, est disposé sur les éléments d'obturation (6) et interagit avec ceux-ci,
- une unité de traitement électronique (12) est disposée de manière fonctionnelle entre le capteur (16) et l'élément d'amortissement (11) de manière que les signaux de capteur (19) puissent être convertis, conformément à une caractéristique prédéterminée, en grandeurs de réglage (20) de l'élément d'amortissement (11), et puissent être transmis à celui-ci.

10. Dispositif selon la revendication 9, **caractérisé en ce qu'**une unité de traitement comporte un microprocesseur (22), des mémoires (23, 24, 25) respectives pour des programmes et des champs caractéristiques ainsi que des interfaces avec des capteurs (16, 17), des éléments d'amortissement (11) et des unités de traitement (13) d'ordre supérieur ainsi que des convertisseurs numériques-analogiques (27, 28).

11. Dispositif selon la revendication 9, **caractérisé en ce qu'**une unité de traitement (12), le ou les capteurs (16) ainsi que les éléments d'amortissement (11) sont disposés dans un boîtier (15) commun dans la tête de soupape, de préférence dans le prolongement de l'axe de soupape.

12. Dispositif selon la revendication 9 ou 11, **caractérisé en ce que** pour déterminer le déplacement linéaire des éléments d'obturation (6), le ou les capteurs (16) sont de préférence des capteurs de mesure de distance.

13. Dispositif selon la revendication 9 ou 11, **caractérisé en ce que** pour déterminer le déplacement linéaire des éléments d'obturation (6), le ou les capteurs (16) sont de préférence des capteurs de vitesse.

14. Dispositif selon la revendication 9 ou 11, **caractérisé en ce que** pour déterminer le déplacement linéaire des éléments d'obturation (6), le ou les capteurs (16) sont des capteurs avec délivrance d'une valeur analogique qui peut être convertie en une valeur numérique, dans l'unité de traitement (12).

15. Dispositif selon la revendication 9, **caractérisé en ce que** le ou les éléments d'amortissement (11), qui peuvent être sollicités de manière variable par une énergie externe, sont des éléments d'amortissement (11) à effet magnétique.

16. Dispositif selon la revendication 9, **caractérisé en ce que** le ou les éléments d'amortissement (11), qui peuvent être sollicités de manière variable par une énergie externe, sont des éléments d'amortissement (11) à effet électrique.

17. Dispositif selon la revendication 9, **caractérisé en ce que** le ou les éléments d'amortissement (11), qui peuvent être sollicités de manière variable par une énergie externe, sont des éléments d'amortissement (11) qui fonctionnent avec la pression d'un fluide.

18. Dispositif selon la revendication 9, **caractérisé en ce qu'**il est prévu, en plus de la soupape (1), au moins un capteur (17) pour détecter la pression sur le côté installations, qui transmet également sa valeur à l'unité de traitement (12).

19. Dispositif selon la revendication 9, **caractérisé en ce que** la caractéristique entre l'ouverture de la soupape (1), après dépassement d'une pression de réponse, ainsi que la fermeture de la soupape (1) après que la pression de réponse n'a pas été atteinte, présente une hystérésis.

20. Dispositif selon la revendication 19, **caractérisé en ce que** l'hystérésis peut être choisie en fonction de la forme de construction de la soupape (1).

21. Dispositif selon la revendication 10, **caractérisé en ce que** les valeurs de réglage (20) ainsi que les valeurs de mesure (19, 18) détectées par le ou les capteurs (16, 17) peuvent être transmises au moyen d'une interface de données (29), de préférence une interface bus, par exemple à des unités de traitement (13) d'ordre supérieur.

22. Dispositif selon la revendication 21, **caractérisé en ce qu'**un champ caractéristique approprié du codage peut être sélectionné à travers l'interface de données (29) d'une unité de traitement (13) d'ordre supérieur.

23. Dispositif selon la revendication 21, **caractérisé en ce que** des fonctions de diagnostic peuvent être exécutées par une unité de traitement (13) d'ordre supérieur, par l'intermédiaire de l'interface de données (29).

24. Dispositif selon la revendication 23, **caractérisé en ce que** ces fonctions de diagnostic peuvent être exécutées aussi par couplage direct d'une unité de diagnostic séparée à l'interface de données (29).
